# EUROPÄISCHE PATENTSCHRIFT

(11) **EP 4 166 798 B1**
(45) Veröffentlichungstag und Bekanntmachung des Hinweises auf die Patenterteilung: **30.10.2024**
(21) Anmeldenummer: 22197062.7
(22) Anmeldetag: 22.09.2022
(51) Int. Cl.: F16B 25/00

(54) **SELBSTSCHNEIDENDE SCHRAUBE**
SELF-TAPPING SCREW
VIS AUTOTARAUDEUSE

(30) Priorität: 15.10.2021 DE 102021211692
(43) Veröffentlichungstag der Anmeldung: 19.04.2023
(73) Patentinhaber: TOGE Dübel GmbH & Co. KG, 90431 Nürnberg (DE)
(72) Erfinder: Gerhard, Andreas, 90427 Nürnberg (DE)
(74) Vertreter: Rau, Schneck & Hübner Patentanwälte Rechtsanwälte PartGmbB

(56) Entgegenhaltungen:
- WO-A1-2019/194920
- DE-U1- 202012 101 482
- DE-U1- 202016 107 016

## Beschreibung

Der Inhalt der deutschen Patentanmeldung DE 10 2021 211 692.2 wird durch Bezugnahme hierin aufgenommen.

Die Erfindung betrifft eine selbstschneidende Schraube.

Schrauben, die selbstschneidend in ein Bohrloch in einen Werkstoff eingedreht werden können, sind aus dem Stand der Technik, insbesondere WO 2019/194920 A1, DE 20 2016 107 016 U1 und DE 20 2012 101 482 U1, bekannt. Diese selbstschneidenden Schrauben weisen ein Schneidgewinde auf, das geeignet ist, an einer Bohrlochinnenwand ein Gewinde einzuschneiden, an dem die Schraube verankert ist.

Es ist die Aufgabe der vorliegenden Erfindung, eine selbstschneidende Schraube bereitzustellen, die unkompliziert und fehlersicher in ein Bohrloch eindrehbar ist.

Diese Aufgabe ist erfindungsgemäß gelöst durch eine Schraube mit den im Anspruch 1 angegebenen Merkmalen.

Erfindungsgemäß wurde erkannt, dass sich verschiedene Maßnahmen bei der Ausgestaltung einer selbstschneidenden Schraube vorteilhaft auf deren Einschraubverhalten auswirken. Die Schraube weist einen eine Längsachse aufweisenden Kern mit einem Nenndurchmesser und ein Einführende auf. Der Kern ist bezüglich der Längsachse insbesondere zylindrisch ausgeführt.

Eine erste Maßnahme ist es, das Einführende gewindefrei und mit einer Einführlänge auszuführen. Das Einführende ist insbesondere gegenüber dem Kern zumindest abschnittsweise verjüngt. Das Einführende vereinfacht das Einführen der selbstschneidenden Schraube in ein Bohrloch. Dadurch, dass das Einführende gewindefrei ausgeführt ist, ist ein Kippen der Schraube bezüglich einer Bohrloch-Längsachse vermieden. Mit dem Einführende ist die selbstschneidende Schraube stabil in dem Bohrloch angeordnet und erleichtert den Beginn des Eindrehvorgangs. Vorteilhaft ist es, wenn die Einführlänge mindestens 15 % des Nenndurchmessers und höchstens 75 % des Nenndurchmessers beträgt, insbesondere zwischen 20 % und 70 % des Nenndurchmessers, insbesondere zwischen 20 % und 60 % des Nenndurchmessers, insbesondere zwischen 25 % und 50 % des Nenndurchmessers und insbesondere zwischen 30 % und 40 % des Nenndurchmessers.

Eine weitere Maßnahme besteht darin, dass am Einführende mindestens eine Längsnut angeordnet ist. Die Längsnut erstreckt sich insbesondere entlang der Längsachse des Kerns, also in axialer Richtung der Schraube. Die Längsnut ist als Außennut an der äußeren Mantelfläche der Schraube ausgeführt. Die Längsnut erstreckt sich insbesondere ausgehend von einer äußeren Stirnfläche der Schraube, wobei die äußere Stirnfläche insbesondere am Einführende angeordnet ist. Es ist möglich, dass an dem Einführende mehrere Längsnuten, insbesondere zwei, drei oder mehr, angeordnet sind. Die Längsnuten können identisch ausgeführt sein, insbesondere bezüglich Nutform und/oder Nutlänge. Die Längsnuten sind in Umfangsrichtung bezogen auf die Längsachse beabstandet, insbesondere gleichmäßig beabstandet, zueinander angeordnet.

Die mindestens eine Längsnut ermöglicht die Aufnahme von Material, das beispielsweise in Form von Bohrmehl nach dem Bohrvorgang noch in dem Bohrloch angeordnet sein kann und/oder das in Folge des Eindrehvorgangs durch das Einschneiden des Gewindes aus dem Bohrloch herausgeschnitten wird. Das Risiko, dass die selbstschneidende Schraube beim Eindrehen durch Material im Bohrloch blockiert, ist reduziert.

Es wurde gefunden, dass das Eindrehverhalten der selbstschneidenden Schraube verbessert ist, wenn die beiden vorstehend genannten Maßnahmen verwirklicht sind.

Die selbstschneidende Schraube ist insbesondere eine Betonschraube. Die selbstschneidende Schraube ist aus einem metallischen Werkstoff, insbesondere aus einem Stahlwerkstoff hergestellt, der insbesondere galvanisch verzinkt und/oder zinklamellenbeschichtet ist. Insbesondere ist die selbstschneidende Schraube aus einem Werkstoff mit der Bezeichnung 1.4401, 1.4404, 1.4571, 1.4578 und/oder 1.4529 hergestellt. Es sind auch andere metallische, insbesondere Stahlwerkstoffe, möglich.

Das Schneidgewinde ist in einem Schneidgewindeabschnitt angeordnet, der einteilig am Kern angeformt ist. In dem Schneidgewindeabschnitt weist die Schraube einen Schaftdurchmesser auf.

Die selbstschneidende Schraube weist ferner einen Drehmomentübertragungsabschnitt auf, der einteilig am Kern angeformt ist. Der Drehmomentübertragungsabschnitt dient insbesondere zum Übertragen eines Drehmoments auf die Schraube, insbesondere mittels eines Werkzeugs.

Die selbstschneidende Schraube dient zum Eindrehen in ein Bohrloch in einem Werkstoff, der insbesondere hart und/oder porös ausgeführt ist, insbesondere Beton. Die selbstschneidende Schraube ist insbesondere eine Betonschraube.

Die Schraube ist insbesondere einteilig hergestellt. Die Schraube dient insbesondere zum Einschrauben in ein Bohrloch in einem harten Werkstoff, insbesondere Beton.

Die Schraube wird insbesondere mit einem Nenndurchmesser d_{N} hergestellt von 5 mm, 6 mm, 8 mm, 10 mm, 12 mm, 14 mm oder 16 mm. Es sind auch andere Nenndurchmesser möglich.

Eine Schraube, bei der die mindestens eine Längsnut eine Nutlänge aufweist, die größer ist als die Einführlänge, ermöglicht einen zuverlässigen Abtransport von Material, insbesondere Bohrmehl. Dadurch, dass die Nutlänge größer ist als die Einführlänge, ist gewährleistet, dass Material, insbesondere Bohrmehl, von dem Schneidgewindeabschnitt zum stirnseitigen Ende der Schraube während des Eindrehvorgangs transportiert werden kann. Vorteilhaft ist es, wenn die mindestens eine Längsnut vor dem Schneidgewinde endet. Das Schneidgewinde ist längsnutfrei ausgeführt. Das Schneidgewinde ist durch die Längsnut nicht unterbrochen. Die Längsnut beeinträchtigt nicht die Schneidleistung der Schraube. Insbesondere sind die mindestens eine Längsnut und das Schneidgewinde entlang der Längsachse der Schraube hintereinander und insbesondere nicht überlappend angeordnet.

Eine Schraube gemäß Anspruch 2 kann besonders stabil in das Bohrloch eingesetzt werden. Die Schraube wird mit dem Einführende in das Bohrloch eingeführt und dadurch radial abgestützt und zentriert. Das Risiko, dass die Schraube gegenüber dem Bohrloch kippt, ist reduziert und insbesondere vermieden. Insbesondere kann der Anpressdruck auf die Schraube beim Eindrehen in das Bohrloch, insbesondere zu Beginn des Eindrehvorgangs, reduziert werden. Dadurch ist das Risiko des Kippens der Schraube zusätzlich reduziert. Insbesondere kann die Schraube ohne Anpressdruck eingeschraubt werden.

Bei einer Schraube gemäß Anspruch 3 weist das Schneidgewinde eine Gewindesteigung auf, die mindestens 50 % des Nenndurchmessers und höchstens 95 % des Nenndurchmessers beträgt. Insbesondere beträgt die Gewindesteigung mindestens 60 % des Nenndurchmessers, insbesondere mindestens 70 % des Nenndurchmessers, insbesondere mindestens 75 % des Nenndurchmessers und insbesondere zwischen 80 % und 85 % des Nenndurchmessers. Es wurde überraschend gefunden, dass diese Festlegung der Gewindesteigung ein leichteres Eindrehen der Schraube ermöglicht, wobei gleichzeitig die Stabilität der Verankerung der eingedrehten Schraube im Werkstoff gewährleistet ist. Es wurde gefunden, dass eine Reduzierung der Gewindesteigung eine Reduzierung des Eindreh-Drehmoments bewirkt. Es wurde aber auch gefunden, dass die Tragfähigkeit des verbleibenden Materials zwischen den eingeschnittenen Gewindewendeln reduziert wird, wenn die Gewindesteigung reduziert wird. Insbesondere bei einer Zugbelastung der eingedrehten Schraube besteht das Risiko, dass das verbleibende Material bei zu geringer Gewindesteigung abschert und die eingedrehte Schraube aus dem Bohrloch herausgerissen wird, wenn die Gewindesteigung zu klein ist. Der vorstehend genannte Bereich für die Gewindesteigung ist also einerseits klein genug, um ein reduziertes Eindreh-Drehmoment zu bewirken und damit das Eindrehen der Schraube zu erleichtern. Die Gewindesteigung ist aber andererseits groß genug, um ein Abscheren der Gewindestege zu verhindern und damit eine ausreichende Tragfähigkeit für die selbstschneidende Schraube im Werkstoff zu garantieren.

Eine Schraube gemäß Anspruch 4 reduziert das Risiko einer Materialblockade und damit ein erhöhtes Eindrehdrehmoment für die Schraube. Es wurde gefunden, dass die am Einführende angeordnete Stirnfläche zumindest abschnittsweise konkav, insbesondere durch eine sogenannte Hohlkehle ausgeführt sein kann. Die Hohlkehle kann vorteilhaft beim Herstellverfahren der Schraube, insbesondere in einem Walzprozess, ausgeführt werden. Die Hohlkehle weist insbesondere eine maximale axiale Tiefe auf, die insbesondere höchstens 30 %, insbesondere höchstens 25 %, insbesondere höchstens 20 % und insbesondere höchstens 15 % des Nenndurchmessers der Schraube beträgt. Beispielsweise beträgt die Tiefe der Hohlkehle zwischen 0,8 mm und 2,0 mm.

Eine Schraube gemäß Anspruch 5 weist einen reduzierten Eindrehwiderstand auf. Insbesondere ist der Schaftdurchmesser bezogen auf den Nenndurchmesser klein ausgeführt. Vorteilhaft ist es, wenn der Schaftdurchmesser mindestens 60 % des Nenndurchmessers beträgt. Der Schaftdurchmesser ist stabil ausgeführt.

Eine Schraube gemäß Anspruch 6 ermöglicht eine unkomplizierte Drehmomentübertragung. Der Drehmomentübertragungsabschnitt kann beispielsweise eine unrunde Außenkontur und/oder eine unrunde Innenkontur aufweisen. Insbesondere kann der Drehmomentübertragungsabschnitt als Schraubenkopf, insbesondere mit einer Außen-Sechskant-Kontur ausgeführt sein. Der Schraubenkopf weist insbesondere eine Schlüsselweite auf, die größer ist als der Nenndurchmesser der Schraube. Die Außenkontur des Drehmomentübertragungsabschnitts kann aber auch mit einer Sechskant-kontur ausgeführt sein, deren Schlüsselweite kleiner ist als der Nenndurchmesser der Schraube. Wenn der Drehmomentübertragungsabschnitt eine unrunde Innenkontur aufweist, kann diese vorteilhaft als InnenSechskant-Kontur oder als Innen-Sechsrund-Kontur ausgeführt sein. Es sind auch andere unrunde Konturen möglich, beispielsweise Dreieck- oder Viereck-Konturen.

Eine Schraube gemäß Anspruch 7 ist besonders stabil und robust. Die Schraube ist insbesondere aus Stahl und insbesondere aus Edelstahl hergestellt. Insbesondere ist die Schraube aus Edelstahl mit korrosionshemmenden Eigenschaften, insbesondere Edelstahl A2 oder Edelstahl A4, insbesondere chromhaltiger und/oder nickelhaltiger Stahl, insbesondere ein Werkstoff der Bezeichnung 1.4301, 1.4401, 1.4404 oder 1.4571. Alternativ kann als Werkstoff auch ein austenitischer, nicht rostender Edelstahl gemäß Werkstoff Nr. 1.4529 verwendet werden.

Insbesondere ist die Schraube nicht wärmebehandelt und insbesondere nicht vergütet und/oder gehärtet. Die Schraube ist insbesondere in einem Walzverfahren hergestellt.

Eine Schraube gemäß Anspruch 8 weist verbesserte Schneideigenschaften auf.

Eine Schraube gemäß Anspruch 9 vereinfacht das Einführen der Schraube in ein Bohrloch. Insbesondere ist ein minimaler Durchmesser der Schraube außenliegend, also insbesondere an einer unteren Stirnfläche am Einführende, angeordnet. Der minimale Durchmesser ist außenliegend angeordnet. Insbesondere beträgt der minimale Durchmesser am Einführende etwa 1 mm weniger als der Schaftdurchmesser und insbesondere 2 mm weniger als der Nenndurchmesser.

Eine Schraube gemäß Anspruch 10 weist verbesserte Schneideigenschaften, insbesondere eine erhöhte Schneidleistung, auf. Ein Schneidelement ist insbesondere als Schneidezahn ausgeführt, der an dem Schneidgewinde insbesondere in radialer Richtung vorstehend ausgeführt ist. Ein derartiger Schneidzahn kann im Walzprozess auf das Schneidgewinde aufgewalzt werden. Der Schneidzahn kann aber auch nachträglich als Schweißpunkt am Schneidgewinde angebracht werden. Ein Schneidelement kann auch durch eine am Schneidgewinde rückspringende Schneidkerbe ausgeführt sein.

Eine Schraube gemäß Anspruch 11 weist verbesserte Materialtransporteigenschaften entlang der Längsnut auf. Die Längsnut weist entlang der Nutlängsachse insbesondere eine V-, eine U- oder eine Rechteckform auf. Eine Nuttiefe, die sich von der äußeren Mantelwand der Schraube bis zum Nutgrund erstreckt, beträgt mindestens 3 % des Nenndurchmessers, insbesondere mindestens 5 %, insbesondere mindestens 8 %, insbesondere mindestens 10 % und insbesondere höchstens 15 %. Die Nutbreite, die durch den Abstand der Nutflanken an der äußeren Mantelfläche der Schraube definiert ist, beträgt insbesondere höchstens 20 %, insbesondere höchstens 15 %, insbesondere höchstens 12 %, insbesondere höchstens 10 % und insbesondere höchstens 5 % des Umfangs der Schraube am Kern.

Sowohl die in den Patentansprüchen angegebenen Merkmale als auch die in dem nachfolgenden Ausführungsbeispiel der erfindungsgemäßen Schraube angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Zusätzliche Merkmale, vorteilhafte Ausgestaltungen und Einzelheiten der Erfindung ergeben sich aus der nachfolgenden Beschreibung eines Ausführungsbeispiels anhand der Zeichnung. Es zeigen:
- Fig. 1: eine Seitenansicht einer erfindungsgemäßen Schraube und
- Fig. 2: eine bezüglich der Längsachse der Schraube um 90° gedrehte Seitenansicht.

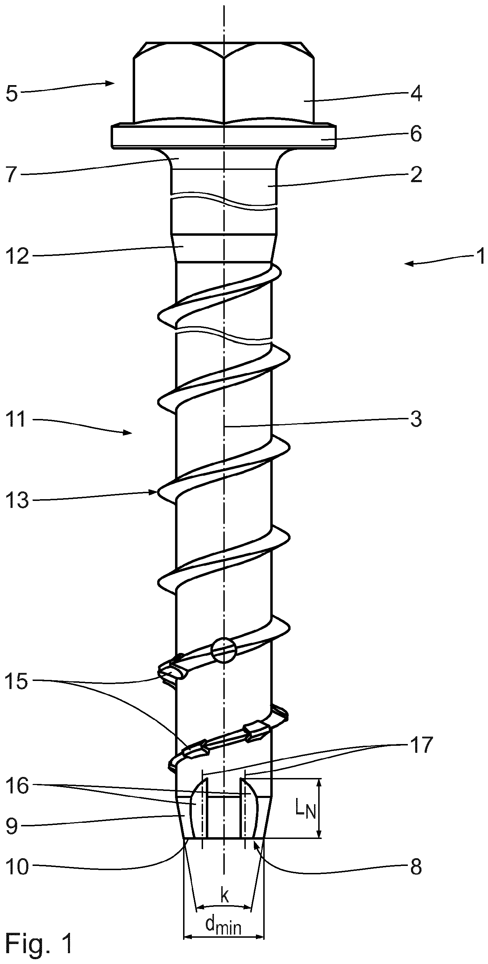

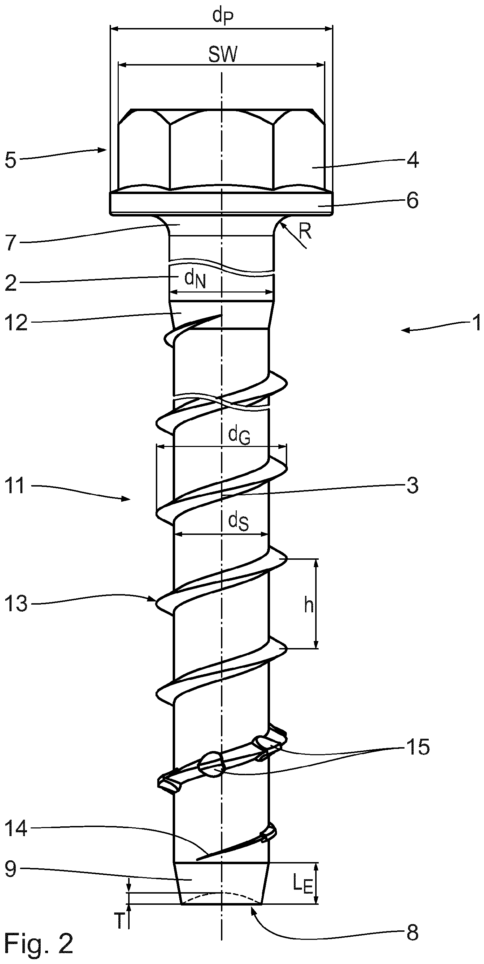

Eine in Fig. 1 und 2 dargestellte Schraube 1 ist eine selbstschneidende Schraube, die aus Edelstahl einteilig hergestellt ist. Die selbstschneidende Schraube 1 dient zum Einschrauben in ein Bohrloch in Beton. Die Schraube 1 ist eine Betonschraube.

Die Schraube 1 weist einen zylindrischen Kern 2 auf. Der Kern 2 ist gewindefrei ausgeführt. Der Kern 2 weist eine Längsachse 3 und einen Nenndurchmesser d_{N} auf.

Einteilig an dem Kern 2 ist ein Drehmomentübertragungsabschnitt 4 angeformt, der gemäß dem gezeigten Ausführungsbeispiel als Sechskant-Schraubenkopf ausgeführt ist. Der Drehmomentübertragungsabschnitt 4 weist eine quer zur Längsachse 3 orientierte Schlüsselweite SW auf, die größer ist als der Nenndurchmesser d_{N}. Der Drehmomentübertragungsabschnitt 4 ist an einem ersten Außenende 5 der Schraube 1 angeordnet. Der Drehmomentübertragungsabschnitt 4 dient zum Ansetzen eines Werkzeuges zum Eindrehen der Schraube 1 in ein Bohrloch.

Es ist auch denkbar, dass der Drehmomentübertragungsabschnitt 4 eine Schlüsselweite SW aufweist, die kleiner ist als der Nenndurchmesser d_{N}. Insbesondere kann der Drehmomentübertragungsabschnitt 4 bezüglich einer oberen Stirnfläche der Schraube 1 beabstandet angeordnet sein. Dies ist insbesondere dann der Fall, wenn der Drehmomentübertragungsabschnitt 4 eine unrunde Innenkontur aufweist und insbesondere axial nach innen versetzt an der Schraube 1 und insbesondere am Kern 2, ausgeführt ist.

Der Schraubenkopf weist eine Ringplatte 6 auf, die insbesondere einen Plattendurchmesser d_{P} aufweist, der größer ist als die Schlüsselweite SW. Die Ringplatte 6 dient zum Aufliegen auf einer Oberfläche an dem Werkstoff.

Ein Übergangsabschnitt 7 zwischen der Ringplatte 6 und dem Kern 2 ist mit einem Übergangsradius R ausgeführt. Eine Kerbwirkung in Folge des Durchmesserübergangs von dem Nenndurchmesser d_{N} auf den Plattendurchmesser d_{P} ist minimiert. An einem dem oberen Außenende 5 gegenüberliegenden unteren Außenende 8 weist die Schraube 1 ein Einführende 9 auf. Mit dem Einführende 9 kann die Schraube 1 in das Bohrloch eingeführt werden. Das Einführende 9 ist gewindefrei ausgeführt. Das Einführende 9 weist entlang der Längsachse 3 eine Einführlänge L_{E} auf. Gemäß dem gezeigten Ausführungsbeispiel gilt: L_{E} = 0,375 x d_{N}.

Das Einführende 9 ist konisch ausgeführt mit einem Konuswinkel k, der gemäß dem gezeigten Ausführungsbeispiel 20° beträgt.

Das Einführende 9 ist zu dem unteren Außenende 8 hin verjüngend ausgeführt. Entsprechend weist das Einführende 9 einen minimalen Durchmesser dₘᵢₙ auf, der an der unteren Stirnfläche 10 angeordnet ist. Gemäß dem gezeigten Ausführungsbeispiel ist der minimale Durchmesser dₘᵢₙ gegenüber dem Nenndurchmesser d_{N} um 2 mm reduziert. Der minimale Durchmesser dₘᵢₙ beträgt 75 % des Nenndurchmessers d_{N}.

Die untere Stirnfläche 10 ist konkav in Form einer Hohlkehle ausgeführt. Die Hohlkehle weist eine sich entlang der Längsachse 3 erstreckende Tiefe T auf, die für die gezeigte Schraube 1,0 mm beträgt.

Entlang der Längsachse 3 weist die Schraube zwischen dem Kern 2 und dem Einführende 9 einen Schneidgewindeabschnitt 11 auf. Das Einführende 9 weist an seinem oberen, dem Schneidgewindeabschnitt 11 zugewandten Ende den Schaftdurchmesser ds auf. Der Schneidgewindeabschnitt 11 ist einteilig am Kern 2 angeformt. Der Schneidgewindeabschnitt 11 ist über einen Konusabschnitt 12 mit dem Kern 2 verbunden. Der Konusabschnitt 12 ist gewindefrei ausgeführt.

Der Schneidgewindeabschnitt 11 weist ein Schneidgewinde 13 mit einem Gewindedurchmesser d_{G} und einer Gewindesteigung h auf. Das Schneidgewinde 13 erstreckt sich insbesondere entlang des kompletten Schneidgewindeabschnitts 11. Wesentlich ist, dass das Schneidgewinde 13 endet, bevor das Einführende 9 beginnt. Ein Schneidgewindeanfang 14 ist im Schneidgewindeabschnitt 11 und insbesondere außerhalb des Einführendes 9 angeordnet. Ausgehend von dem Schneidgewindeanfang 14 ist der Gewindedurchmesser d_{G} ansteigend ausgeführt. Der Anstieg des Gewindedurchmessers d_{G} erstreckt sich über mindestens eine halbe und insbesondere mindestens eine Umdrehung des Schneidgewindes 13.

Der Schneidgewindeabschnitt 11 weist einen Schaftdurchmesser ds auf, der kleiner ist als der Nenndurchmesser d_{N}. Insbesondere beträgt der Schaftdurchmesser ds höchstens 95 % des Nenndurchmessers d_{N}.

Der Gewindedurchmesser d_{G} beträgt mindestens 110 % des Nenndurchmessers d_{N}.

Die Gewindesteigung h beträgt insbesondere zwischen 80 % und 85 % des Nenndurchmessers d_{N}.

Wie in Fig. 1 und 2 durch die Unterbrechungen angedeutet, kann der Schneidgewindeabschnitt 11 und/oder der Kern 2 eine veränderlich festlegbare axiale Länge aufweisen.

Das Schneidgewinde 13 weist mehrere Schneidelemente 15 auf. Die Schneidelemente 15 sind bei der gezeigten Schraube 1 als Schweißpunkte ausgeführt, die nachträglich an der aufgewalzten Gewindewendel aufgeschweißt worden sind. Die Schneidelemente 15 erstrecken sich gemäß dem gezeigten Ausführungsbeispiel über 1,5 Umdrehungen der Gewindewendel des Schneidgewindes 13. Gemäß dem gezeigten Ausführungsbeispiel sind mehrere Schneidelemente 15 vorgesehen. Insbesondere können mindestens zwei, insbesondere mindestens vier, insbesondere mindestens acht oder mehr Schneidelemente 15 vorgesehen sein. Es ist denkbar, dass sich die Schneidelemente entlang der Gewindewendel des Schneidgewindes 13 über mindestens 0,5 Umdrehungen, insbesondere über mindestens eine Umdrehung, insbesondere über mindestens zwei Umdrehungen und insbesondere über drei Umdrehungen erstrecken.

Insbesondere weist das Schneidgewinde 13 einen Abschnitt auf, der schneidelementfrei ausgeführt ist. In diesem Bereich dient das Schneidgewinde 13 insbesondere als Traggewinde, wenn die Schraube 1 im Bohrloch verankert angeordnet ist.

Am Einführende 9 sind zwei Längsnuten 16 angeordnet. Die Längsnuten 16 sind identisch ausgeführt und weisen eine sich entlang der Längsachse 3 erstreckende Nutlänge L_{N} auf. Die Nutlänge L_{N} ist größer als die Einführlänge L_{E}.

Dadurch, dass die Nutlänge L_{N} größer ist als die Einführlänge L_{E}, ragen die Längsnuten 16 zumindest anteilig in den Gewindeabschnitt 11 vor.

Es ist möglich, nur eine Längsnut 16 oder mehr als zwei Längsnuten 16 vorzusehen. Die Längsnuten 16 sind in Umfangsrichtung um die Längsachse 3 an der äußeren Mantelfläche der Schraube 1, insbesondere des Einführendes 9 beabstandet zueinander angeordnet. Die Längsnuten 16 weisen jeweils eine Nutlängsachse 17 auf, die parallel zur Längsachse 3 orientiert ist. Die Längsnuten 16 sind parallel zur Längsachse 3 und insbesondere parallel zueinander orientiert. Die Längsnuten 16 erstrecken sich von der unteren Stirnfläche 10 aus entlang der Längsachse 3. Die Längsnuten 16 sind als Außennuten an der äußeren Mantelfläche der Schraube 1 ausgeführt.

## Patentansprüche

1. Selbstschneidende Schraube umfassend
a. einen eine Längsachse (3) aufweisenden Kern (2) mit einem Nenndurchmesser (d_{N}),
b. einen einteilig am Kern (2) angeformten Schneidgewindeabschnitt (11) mit einem eine Gewindesteigung (h) aufweisenden Schneidgewinde (13) und einem Schaftdurchmesser (ds),
c. einen einteilig am Kern (2) angeformten Drehmomentübertragungsabschnitt (4),
d. ein Einführende (9),
wobei
e. das Einführende (9) gewindefrei ausgeführt ist und eine Einführlänge (L_{E}) aufweist,
f. am Einführende (9) mindestens eine Längsnut (16) angeordnet ist,
g. die mindestens eine Längsnut (16) eine Nutlänge (L_{N}) aufweist, die größer ist als die Einführlänge (L_{E}),
**dadurch gekennzeichnet, dass** das Schneidgewinde (13) längsnutfrei ausgeführt ist.

2. Schraube gemäß Anspruch 1, **dadurch gekennzeichnet, dass** das Einführende (9) konisch ausgeführt ist mit einem Konuswinkel (k), der insbesondere kleiner ist als 90°, insbesondere höchstens 60°, insbesondere höchstens 40°, insbesondere höchstens 35°, insbesondere höchstens 20° und insbesondere mindestens 15°.

3. Schraube gemäß einem der vorstehenden Ansprüche, **dadurch gekennzeichnet, dass** gilt 0,5 · d_{N} ≤ h ≤ 0,95 · d_{N}.

4. Schraube gemäß einem der vorstehenden Ansprüche, **dadurch gekennzeichnet, dass** eine am Einführende (9) angeordnete Stirnfläche (10) zumindest abschnittsweise konkav ausgeführt ist.

5. Schraube gemäß einem der vorstehenden Ansprüche, **dadurch gekennzeichnet, dass** der Schaftdurchmesser (ds) kleiner ist als der Nenndurchmesser (d_{N}), wobei insbesondere gilt: ds < 0,95 ·d_{N}, insbesondere d_{S} ≤ 0,9 ·d_{N}, insbesondere d_{S} ≤ 0,85 ·d_{N}, insbesondere d_{S} ≤ 0,825 ·d_{N}, insbesondere d_{S} ≤ 0,8 ·d_{N}.

6. Schraube gemäß einem der vorstehenden Ansprüche, **dadurch gekennzeichnet, dass** der Drehmomentübertragungsabschnitt (4) in einer Ebene senkrecht zur Längsachse (3) eine unrunde Kontur aufweist.

7. Schraube gemäß einem der vorstehenden Ansprüche, **dadurch gekennzeichnet, dass** die Schraube (1) aus Metall, insbesondere aus Stahl und insbesondere aus Edelstahl hergestellt ist.

8. Schraube gemäß einem der vorstehenden Ansprüche, **dadurch gekennzeichnet, dass** das Schneidgewinde (13) einen Gewindedurchmesser (d_{G}) aufweist, der größer ist als der Nenndurchmesser (d_{N}), wobei insbesondere gilt: d_{G} ≥ 1,1 ·d_{N}, insbesondere d_{G} ≥ 1,2 ·d_{N}, insbesondere d_{G} ≥ 1,25 ·d_{N}, insbesondere d_{G} ≥ 1,3 ·d_{N}.

9. Schraube gemäß einem der vorstehenden Ansprüche, **dadurch gekennzeichnet, dass** das Einführende (9) einen minimalen Durchmesser (dₘᵢₙ) aufweist, wobei insbesondere gilt: dₘᵢₙ ≤ 0,9 ·d_{N}, insbesondere dₘᵢₙ ≤ 0,85 ·d_{N}, insbesondere dₘᵢₙ ≤ 0,8 ·d_{N}, insbesondere dₘᵢₙ ≤ 0,75 ·d_{N}, insbesondere dₘᵢₙ ≤ 0,7 ·d_{N}, insbesondere dₘᵢₙ ≤ 0,65 ·d_{N}.

10. Schraube gemäß einem der vorstehenden Ansprüche, **dadurch gekennzeichnet, dass** das Schneidgewinde (13) mindestens ein Schneidelement (15) aufweist.

11. Schraube gemäß einem der vorstehenden Ansprüche, **dadurch gekennzeichnet, dass** die mindestens eine Längsnut (16) eine Nutlängsachse (17) aufweist mit einer in einer Normalebene der Nutlängsachse (17) angeordneten Nutbreite und Nuttiefe.

## Claims

1. Self-tapping screw comprising
a. a core (2), which has a longitudinal axis (3) and a nominal diameter (d_{N}),
b. a cutting-thread portion (11), which is formed integrally on the core (2) and has a cutting thread (13), having a thread pitch (h), and has a shank diameter (ds),
c. a torque-transmission portion (4), which is formed integrally on the core (2),
d. an insertion end (9),
wherein
e. the insertion end (9) is formed without a thread and has an insertion length (L_{E}),
f. at least one longitudinal groove (16) is arranged on the insertion end (9),
g. the at least one longitudinal groove (16) has a groove length (L_{N}) which is greater than the insertion length (L_{E}),
**characterized in that** the cutting thread (13) is formed without a longitudinal groove.

2. Screw according to Claim 1, **characterized in that** the insertion end (9) is formed so as to be conical with a cone angle (k) which is in particular less than 90°, in particular at most 60°, in particular at most 40°, in particular at most 35°, in particular at most 20° and in particular at least 15°.

3. Screw according to either of the preceding claims, **characterized in that** 0.5 · d_{N} ≤ h ≤ 0.95 · d_{N} holds true.

4. Screw according to one of the preceding claims, **characterized in that** an end face (10) arranged on the insertion end (9) is formed so as to be at least sectionally concave.

5. Screw according to one of the preceding claims, **characterized in that** the shank diameter (ds) is smaller than the nominal diameter (d_{N}), wherein in particular: ds ≤ 0.95 · d_{N}, in particular d_{S} ≤ 0.9 ·d_{N}, in particular d_{S} ≤ 0.85 · d_{N}, in particular d_{S} ≤ 0.825 · d_{N}, in particular d_{S} ≤ 0.8 · d_{N}, holds true.

6. Screw according to one of the preceding claims, **characterized in that** the torque-transmission portion (4) has a non-round contour in a plane perpendicular to the longitudinal axis (3).

7. Screw according to one of the preceding claims, **characterized in that** the screw (1) is produced from metal, in particular from steel and in particular from high-grade steel.

8. Screw according to one of the preceding claims, **characterized in that** the cutting thread (13) has a thread diameter (d_{G}) which is greater than the nominal diameter (d_{N}), wherein in particular: d_{G} ≥ 1.1 · d_{N}, in particular d_{G} ≥ 1.2 · d_{N}, in particular d_{G} ≥ 1.25 · d_{N}, in particular d_{S} ≥ 1.3 · d_{N}, holds true.

9. Screw according to one of the preceding claims, **characterized in that** the insertion end (9) has a minimum diameter (dₘᵢₙ), wherein in particular: dₘᵢₙ ≤ 0.9 · d_{N}, in particular dₘᵢₙ ≤ 0.85 · d_{N}, in particular dₘᵢₙ ≤ 0.8 · d_{N}, in particular dₘᵢₙ ≤ 0.75 · d_{N}, in particular dₘᵢₙ ≤ 0.7 · d_{N}, in particular dₘᵢₙ ≤ 0.65 · d_{N}, holds true.

10. Screw according to one of the preceding claims, **characterized in that** the cutting thread (13) has at least one cutting element (15).

11. Screw according to one of the preceding claims, **characterized in that** the at least one longitudinal groove (16) has a groove longitudinal axis (17) with a groove depth and groove width arranged in a plane normal to the groove longitudinal axis (17).

## Revendications

1. Vis auto-taraudeuse, comprenant
a. un noyau (2) présentant un axe longitudinal (3) ayant un diamètre nominal (d_{N}),
b. une section de filetage de coupe (11) formée d'un seul tenant sur le noyau (2), ayant un filetage de coupe (13) présentant un pas de filetage (h) et un diamètre de tige (d_{S}),
c. une section de transmission de couple (4) formée d'un seul tenant sur le noyau (2),
d. une extrémité d'insertion (9),
e. l'extrémité d'insertion (9) étant conçue sans filetage et présentant une longueur d'insertion (L_{E}),
f. au moins une rainure longitudinale (16) étant agencée sur l'extrémité d'insertion (9),
g. l'au moins une rainure longitudinale (16) présentant une longueur de rainure (L_{N}) qui est supérieure à la longueur d'insertion (L_{E}),
**caractérisée en ce que** le filetage de coupe (13) est conçu sans rainure longitudinale.

2. Vis selon la revendication 1, **caractérisée en ce que** l'extrémité d'insertion (9) est conçue sous forme conique avec un angle de cône (k) qui est notamment inférieur à 90°, notamment d'au plus 60°, notamment d'au plus 40°, notamment d'au plus 35°, notamment d'au plus 20° et notamment d'au moins 15°.

3. Vis selon l'une quelconque des revendications précédentes, **caractérisée en ce que** 0,5 · d_{N} ≤ h ≤ 0,95 · d_{N}.

4. Vis selon l'une quelconque des revendications précédentes, **caractérisée en ce qu'**une surface frontale (10) agencée sur l'extrémité d'insertion (9) est conçue sous forme concave au moins par sections.

5. Vis selon l'une quelconque des revendications précédentes, **caractérisée en ce que** le diamètre de tige (ds) est inférieur au diamètre nominal (d_{N}), avec notamment : d_{S} ≤ 0,95 · d_{N}, notamment d_{S} ≤ 0,9 · d_{N}, notamment d_{S} ≤ 0,85 · d_{N}, notamment d_{S} ≤ 0, 825 · d_{N}, notamment d_{S} ≤ 0,8 · d_{N}.

6. Vis selon l'une quelconque des revendications précédentes, **caractérisée en ce que** la section de transmission de couple (4) présente un contour non circulaire dans un plan perpendiculaire à l'axe longitudinal (3).

7. Vis selon l'une quelconque des revendications précédentes, **caractérisée en ce que** la vis (1) est fabriquée en métal, notamment en acier et notamment en acier inoxydable.

8. Vis selon l'une quelconque des revendications précédentes, **caractérisée en ce que** le filetage de coupe (13) présente un diamètre de filetage (d_{G}) qui est supérieur au diamètre nominal (d_{N}), avec notamment : d_{G} ≥ 1,1 · d_{N}, notamment d_{G} ≥ 1,2 · d_{N}, notamment d_{G} ≥ 1,25 · d_{N}, notamment d_{G} ≥ 1,3 · d_{N}.

9. Vis selon l'une quelconque des revendications précédentes, **caractérisée en ce que** l'extrémité d'insertion (9) présente un diamètre minimal (dₘᵢₙ), avec notamment : dₘᵢₙ ≤ 0,9 · d_{N}, notamment dₘᵢₙ ≤ 0,85 · d_{N}, notamment dₘᵢₙ ≤ 0,8 · d_{N}, notamment dₘᵢₙ ≤ 0,75 · d_{N}, notamment dₘᵢₙ ≤ 0,7 · d_{N}, notamment dₘᵢₙ ≤ 0, 65 · d_{N}.

10. Vis selon l'une quelconque des revendications précédentes, **caractérisée en ce que** le filetage de coupe (13) présente au moins un élément de coupe (15).

11. Vis selon l'une quelconque des revendications précédentes, **caractérisée en ce que** l'au moins une rainure longitudinale (16) présente un axe longitudinal de rainure (17) avec une largeur de rainure et une profondeur de rainure agencées dans un plan normal de l'axe longitudinal de rainure (17).
